(19) Europäisches Patentamt
European Patent Office
Office européen des brevets

(11) **EP 0 816 817 A2**

(12) **EUROPÄISCHE PATENTANMELDUNG**

(43) Veröffentlichungstag:
07.01.1998 Patentblatt 1998/02

(51) Int. Cl.$^6$: **G01L 5/16**, G01L 5/20,
G01L 1/22

(21) Anmeldenummer: 97107018.0

(22) Anmeldetag: 28.04.1997

(84) Benannte Vertragsstaaten:
**DE FR GB IT**

(30) Priorität: **06.07.1996 DE 19627385**

(71) Anmelder:
**Bayerische Motoren Werke Aktiengesellschaft
80788 München (DE)**

(72) Erfinder:
• **Kuchler, Maximilian
80689 München (DE)**
• **Meier, Hubert
85221 Dachau (DE)**
• **Nohl, Friedrich
82061 Neuried (DE)**
• **Ferrufino-Camacho, David Alfredo
84130 Dingolfing (DE)**

(54) **Radmessnabe**

(57) Die Erfindung betrifft eine Radmeßnabe mit einem Meßwertaufnehmer (5), der ein äußeres (10) und ein inneres (12) Ringteil umfaßt, wobei an dessen äußeren Ringteil (10) eine Felge anordenbar ist, an dessen innerem Ringteil (12) ein Radflansch anordenbar ist und beide Ringteile (10, 12) über radial verlaufende Meßstege (14) miteinander verbunden sind, an denen Dehnmeßstreifen (16) zur Bestimmung von zu messenden Kräften und Momenten angeordnet sind.

Aufgabe der Erfindung ist es, eine solche Radmeßnabe zu entwickeln, daß präzise die Bestimmung der drei auftretenden Kräfte Fx, Fy und Fz sowie der dazugehörigen Momente Mx, My und Mz in optimaler Weise erreicht werden kann.

Dies wird dadurch erreicht, daß die Dehnmeßstreifen derart angeordnet, ausgerichtet und miteinander verschaltet sind, um alle Kräfte und Momente über die bei Belastung auftretende Schubspannungen zu ermitteln.

Fig. 1

**Beschreibung**

Die Erfindung betrifft eine Radmeßnabe gemäß dem Oberbegriff des Anspruchs 1.

Aus der DE-OS 2302540 ist eine Meßnabe beschrieben mit einem äußeren Ringteil, einem inneren Ringteil und vier Meßstegen, welche beide Ringteile miteinander verbinden und jeweils 90° zueinander winkelversetzt sind. An den Meßstegen sind Dehnmeßstreifen angeordnet, um die auf die Radmeßnabe einwirkenden Kräfte erfassen zu können.

Aus der DE-OS 3213319 ist ebenfalls eine Radmeßnabe mit einem zentralen Nabenteil, einem starten, ringförmigen Felgenteil und vier Speichenteilen bekannt. Die vier Speichenteile erstrecken sich vom Nabenteil im rechten Winkel zueinander radial nach außen und besitzen jeweils einen rechtwinkligen Querschnitt. Ferner sind vier Sehnenteile vorgesehen, die mittig mit den äußeren Enden entsprechender Speichenteile und mit ihren beiden Enden mit jeweiligen Felgenteilen verbunden sind. Zur Messung der auf die Radmeßnabe einwirkenden Kräfte sind an den vier Speichenteilen Dehnmeßstreifen vorgesehen, die - in entsprechenden Brückenschaltungen verbunden - die entsprechenden Signale für die einzelnen, zu ermittelnden Kräfte und Momente liefern.

Mit den jeweiligen, in den obengenannten Offenlegungsschrifte beschriebenen Radmeßnaben ist es jedoch nicht zufriedenstellend möglich, die zu erfassenden Kräfte und Momente, nämlich die Radlängskraft Fx, die Radaufstandskraft Fz, die Radseitenkraft Fy, das Sturzmoment Mx, das Rückstellmoment Mz sowie das Bremsmoment My, getrennt und unbeinflußt voneinander sowie unter Ausschließung von äußeren Umwelteinflüssen zu messen.

Aufgabe der Erfindung ist es, eine Radmeßnabe der eingangs genannten Art derart weiterzubilden, daß die zu ermittelnden Kräfte und Momente ohne gegenseitige Beeinflussung präzise ermittelt werden können. Insbesondere sollte die Raddrehzahl hochaufgelöst ermittelt werden.

Diese Aufgabe wird durch die im Anspruch 1 angegebenen Merkmale gelöst.

Demgemäß werden bei einer Radmeßnabe der eingangs genannten Art die Dehnmeßstreifen an den Meßstegen derart angeordnet, ausgerichtet und miteinander verschaltet, daß alle Kräfte und Momente ausschließlich über die bei Belastung auftretende Schubspannung ermittelt werden können. Mit dieser Maßnahme ist es möglich, die einzelnen Kraft- und Momentkomponenten in optimaler Weise voneinander zu entkoppeln und separat zu erfassen. Der Vorteil dieser Meßmethode wird nachfolgend noch erläutert.

Gemäß einer vorzugsweisen Ausführungsform der Erfindung werden im Bereich des Übergangs zwischen den Meßstegen und dem äußeren Ringteil Durchbrüche oder Langlöcher angeordnet. Dies ermöglicht über die vorgenannte Maßnahme hinaus eine nochmals bessere Entkopplung der entsprechenden Kräfte und Momente, so daß in die einzelnen Meßstege, seien sie senkrecht zur oder in Fahrtrichtung ausgerichtet, nur eine Art von Kräften und Momenten eingeleitet wird. Die Dimensionierung der Durchbrüche bzw. Langlöcher geschieht dabei vorzugsweise so, daß die Kräfte- und Momententrennung sowie eine erhebliche Erhöhung der Meßempfindlichkeit optimal erreicht wird.

Es ist gemäß einer vorzugsweisen Ausführungsform der Erfindung eine Signalaufbereitungs-, Übertragungs- und Auswerteeinrichtung vorgesehen, welche die mittels der Dehnmeßstreifen gewonnenen Daten von der rotierenden Radmeßnabe während eines Meßvorgangs auf ein fahrzeugfestes Teil überträgt.

Dazu kann auch eine Funkübertragung verwendet werden. Alternativ kann die Übertragung mittels einer Infrarottelemetrieübertragungseinrichung durchgeführt werden. Dies erlaubt die Vielzahl der anfallenden Daten schnell und fehlerlos von der rotierenden Meßnabe auf ein entsprechendes Meßdatenerfassungsgerät im Fahrzeug zu übermitteln.

Zur Auswertung der entsprechenden Signale der Dehnmeßstreifen auf den Meßstegen ist es erforderlich, die Stellung des Rades am Fahrzeug bzw. des Meßwertgebers genau zu kennen, so daß gesagt werden kann, ob die Meßstege senkrecht zur oder in Fahrtrichtung ausgerichtet sind. Dazu wird vorzugsweise zumindest ein Hallsensor vorgesehen, der mit einem mit dem Meßwertaufnehmer verbundenen Impulsring zusammenwirkt. Von einer Steuerelektronik können die vom Hallsensor gelieferten Daten ausgewertet und dadurch auf die Stellung des Meßwertaufnehmers geschlossen werden. Der Impulsring kann beispielsweise an dem äußeren Ringteil des Meßwertaufnehmers befestigt sein. Der Hallsensor ist fahrzeugfest angeordnet. Alternativ können auch andere Winkelstellung-Erfassungseinrichtungen verwendet werden.

Gemäß einer bevorzugten Ausführungsform der Erfindung werden zwei Hallsensoren vorgesehen, die derart zueinander winkelversetzt sind, um eine Drehrichtungserfassung zu ermöglichen. Damit kann nicht nur die Absolutstellung der Radmeßnabe und durch die Codierung des Impulsringes der 0° Winkel des Meßsystems, sondern auch die Drehrichtung ohne weiteres ermittelt werden.

Eine Steuerungsvorrichtung kann ferner im inneren Ringteil aufgenommen sein, so daß bereits ausgewertete Daten über die Übertragungseinrichtung an eine weitere Steuer- und Auswerteeinheit im Fahrzeug übertragbar sind. Die übertragenen Meßsignale können zur Entwicklung und Steuerung von Fahrdynamikregelsystemen verwendet werden.

In einer Gruppe von Ansprüchen ist dargestellt, inwieweit die nur Schubspannungen erfassenden Dehnmeßstreifen angeordnet sind, um die zu ermittelnden Kräfte und Momente in geeigneter Weise erfassen zu können. Insbesondere sind dabei auch Anordnungsmöglichkeiten aufgezeigt, um die Dehnmeßstreifen zu Vollbrückenschaltungen miteinander zu verschalten, so daß eine besonders gut auflösende und präzise Meßanordnung sichergestellt ist. Die entsprechenden Vorteile und Merkmale werden nachfolgend noch weiter beschrieben werden.

Von Vorteil ist es ferner, wenn die Dehnmeßstreifen an den Meßstegen abgedeckt sind, beispielsweise mittels Verkleiden der Meßstege, so daß Umwelteinflüsse (beispielsweise die Strahlungswärme im Umfeld der Radmeßnabe bei einem Bremsvorgang) keine Auswirkungen auf die Meßergebnisse haben können. Dennoch sollte auf eine ausreichende Kühlung geachtet werden.

Die Erfindung wird nachfolgend - auch in Hinblick auf weitere Vorteile und Merkmale der Erfindung - anhand von beiliegenden Zeichnungen erläutert, in denen

Fig. 1 eine schematische Draufsicht auf den Meßwertaufnehmer einer erfindungsgemäßen Radmeßnabe mit auf den Meßstegen angeordneten Dehnmeßstreifen zeigt,

Fig. 2 eine perspektivische Ansicht mit Teilschnitt einer erfindungsgemäßen Radmeßnabe zeigt, wobei ein Impulsring sowie eine am inneren Ringteil angeordnete Daten- und Energieübertragungselektronik zu erkennen ist und der teilweise gehäuseförmig ausgebildete innere Ringteil (Innenring) die Elektronikplatinen für Meßverstärker und Rechenprozessoren darstellt,

Fig. 3 ein Schaltschema zeigt, gemäß welchem die Signalaufbereitung und -verarbeitung durchgeführt werden kann,

Fig. 4 eine Prinzip-Darstellung eines Rades mit den darauf einwirkenden Kräften und Momenten ist,

Fig. 5 eine Prinzip-Darstellung eines Meßstabs zeigt, an dem Dehnmeßstreifen zur Erfassung von Schubspannungen angeordnet sind,

Fig. 6a eine schematische Darstellung der an einem Meßwertaufnehmer vorhandenen Meßstegflächen ist, wobei die Anordung und Verschaltung der Dehnmeßstreifen im Hinblick auf die Erfassung der Längskraft Fx hervorgeht,

Fig. 6b eine Schaltanordnung der Dehnmeßstreifen aus Fig. 6a in einer Vollbrückenschaltung ist,

Fig. 7a eine Darstellung wie Fig. 6a, wobei die Anordnung und Verschaltung der Dehnmeßstreifen im Hinblick der Erfassung der Radaufstandskraft Fz dargestellt ist,

Fig. 7b eine Schaltanordnung wie Fig. 6b ist, wobei die Verschaltung der Dehnmeßstreifen entsprechend Fig. 7a erfolgt ist,

Fig. 8a eine Darstellung wie Fig. 6a ist, jedoch mit der Anordnung und Verschaltung der Dehnmeßstreifen zur Erfassung der Radseitenkraft Fy,

Fig. 8b eine Schaltanordnung in einer Vollbrückenschaltung ist, die die Verschaltung der Dehnmeßstreifen in Fig. 8a wiedergibt,

Fig. 9a eine Darstellung wie Fig. 6a ist, jedoch mit einer Anordnung und Verschaltung der Dehnmeßstreifen zur Erfassung des Sturzmoments Mx,

Fig. 9b eine elektrische Schaltanordnung ist, wobei die Verschaltung der Dehnmeßstreifen gemäß Fig. 9a in einer Vollbrückenschaltung dargestellt ist,

Fig. 10a eine Darstellung wie Fig. 6a zeigt, jedoch mit einer Anordnung und Verschaltung der Dehnmeßstreifen zur Erfassung des Rückstellmoments Mz,

Fig. 10b eine elektrische Schaltanordnung in einer Vollbrückenschaltung zeigt, wobei die Verschaltung gemäß Fig. 10a nochmals dargestellt ist,

Fig. 11a eine Darstellung wie Fig. 6a zeigt, jedoch mit der Anordnung und Verschaltung von Dehnmeßstreifen zur Erfassung des Bremsmoments My und

Fig. 11b eine Schaltanordnung in Vollbrückenschaltung zeigt, die der Verbindung der Dehnmeßstreifen in Fig. 11a entspricht.

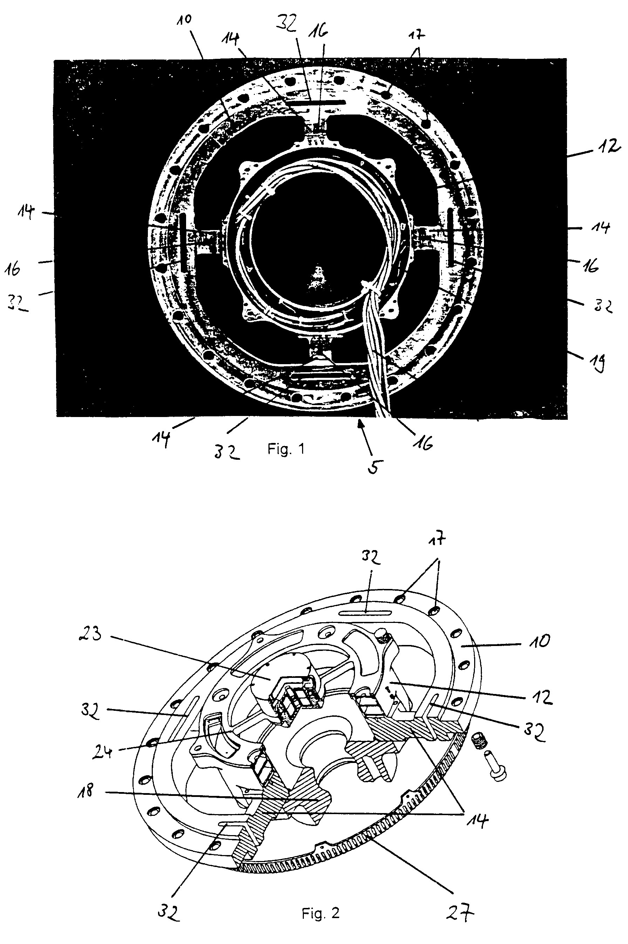

In Figur 1 ist ein Ausführungsbeispiel eines Meßwertaufnehmers 5 einer Radnabe dargestellt, der den zentralen Teil einer solchen Meßvorrichtung bildet. Insbesondere ist ein äußeres Ringteil 10 und ein inneres Ringteil 12 zu erkennen sowie die beide Ringteile verbindenden Meßstege 14, auf welchen auf den entsprechenden Flächen Dehnmeßstreifen 16 angeordnet sind. Sowohl auf die Anordnung als auch die Verschaltung der entsprechenden Dehnmeßstreifen 16 wird nachfolgend noch eingegangen werden.

Im äußeren Ringteil 10 sind Bohrungen 17 vorgesehen, über die mittels Schrauben eine nicht dargestellte Felge eines Rades befestigt werden kann.

Am inneren Ringteil 12 wird ein Radflansch 18 (Fig.2) befestigt, der auf der Achse des Fahrzeugs aufsitzt. Zugleich ist im inneren Ringteil 12 ein Bauraum 19 vorhanden, in dem die Elektronikplatinen für DMS-(Dehnmeßstreifen)-Verschaltungen, Meßverstärker und Rechenprozessoren aufgenommen sind, welche die Verbindung zur Daten- und Energieübertragungselektronik 23 herstellt.

In den Figuren 1 und 2 sind ferner vier Langlöcher 32 zu erkennen, die jeweils zwischen den Meßstegen 14 sowie dem äußeren Ringteil 10 derart angeordnet sind, daß eine speichenartige Verbindung entsteht, wobei die Speichenenden in das äußere Ringteil 10 übergehen und das Speichenmittelteil mit dem jeweiligen Meßsteg 14 verbunden ist.

Zum besseren Verständnis wird zunächst auf einige Grundsätze eingegangen.

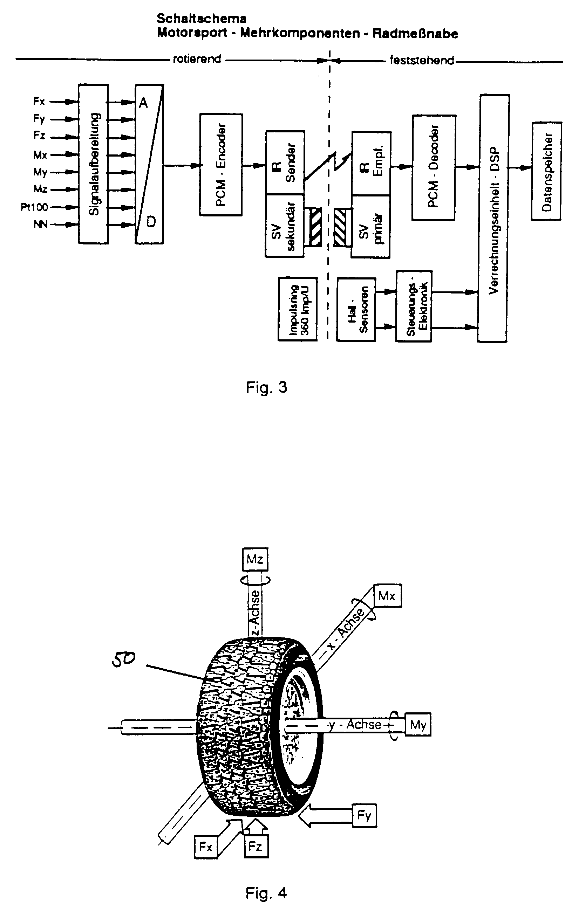

An einem Fahrzeugrad 50 greifen bei Belastung äußere Kräfte und Momente an. Es sind dies - wie aus Figur 4 zu erkennen ist - die Längskraft Fx in Richtung der X-Achse, die Seitenkraft Fy in Richtung der Y-Achse und die Radaufstandskraft Fz in Richtung der Z-Achse. Ferner treten dazugehörige Momente auf, wie das Sturzmoment Mx um die X-Achse, das Brems-Antriebsmoment My um die Y-Achse und das Rückstellmoment Mz um die Z-Achse. Alle Größen müssen simultan erfaßt werden. Dabei mißt ein Dehnmeßstreifen in der Tat die Dehnung und nicht die Kraft. Er muß also so konstruiert und angeordnet sein, daß die zu messende Kraft im Meßelement eine geeignete Materialspannung erzeugt. Abhängig davon wird eine entsprechende Dehnung hervorgerufen, die der durch die auftretenden Kräfte verursachten Verformung entspricht. Der Zusammenhang zwischen eingeleiteter Kraft und dem gemessenen Signal soll linear und hysteresefrei sein. Ferner geht man bei der Berechnung von Biegestäben von idealen Biegebalken aus. Daher muß eine von den Hebelverhältnissen unabhängige Lösung erarbeitet werden, wozu sich die Aufnahme der Meßsignale mittels auf Schubspannung applizierter Dehnmeßstreifen eignet. Diese Messungsart bildet das Kernstück der vorliegenden Meßanordnung.

Allgemein wirken bei den Normalspannungen die in entgegengesetzten Richtungen auftretenden Zug- oder Druckkräfte immer in der gleichen Achse. Sie versuchen, den Werkstoff zu dehnen oder zu stauchen.

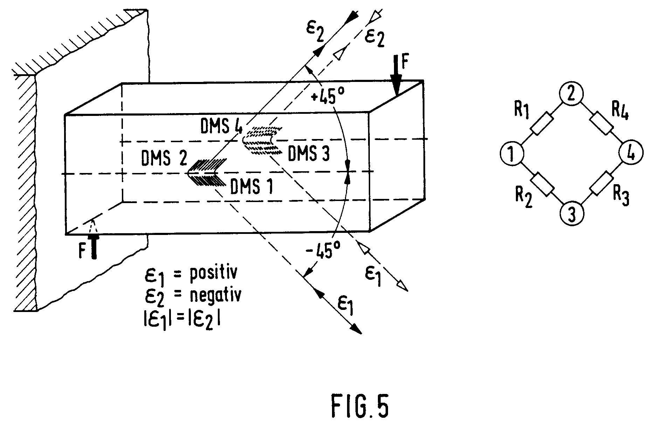

In ähnlicher Weise, wie beim Torsionsstab die Schubspannungen in Verbindung mit einem Drehmoment auftreten, so entstehen sie beim Scherstab in Verbindung mit einem Biegemoment. In Figur 5 ist ein einseitig eingespannter Balken dargestellt, der im Abstand l mit einer Kraft F belastet wird. Durch die gleich große Reaktionskraft an der Einspannstelle entsteht ein entgegengesetzt gerichtetes Kräftepaar.

Die mit den Schubspannungen einhergehenden Normalspannungen verlaufen - wie beim Torsionsstab - unter einem Winkel von 45° zur Schubebene. Gleichzeitig bewirkt die Kraft F mal der Strecke l ein Biegemoment; die davon erzeugte Biegespannungen überlagern sich den Normalspannungen. Deshalb gilt die Winkelangabe ± 45° exakt nur in Höhe der neutralen Faserschicht, wo die Biegespannungen zu Null werden. Zu den Rändern hin dreht sich das Achsenkreuz, so daß die Randspannungen parallel zu den Rändern verlaufen. Es ist deshalb wichtig, die Dehnmeßstreifen (DMS1-DMS4 in Fig. 5) so nahe wie möglich an die neutrale Faser heran zubringen. In zweiachsigen Dehnungsfeldern werden Dehnmeßstreifen mit mehreren Gittern, die über oder nebeneinander in bestimmten Richtungen angeordnet sind, eingesetzt. Die minus 45° zur Längsachse eingebetteten Gitter eignen sich im besonderen zur Messung der Schubspannung auf der Oberfläche von Meßkörpern. Beim vorliegenden Ausführungsbeispiel werden auf den Meßkörpern zur Aufnahme der sechs Komponenten (drei Kräfte und drei Momente) insgesamt achtzig Dehnmeßstreifen appliziert.

Dehnmeßstreifen sind passive Aufnehmer, die gleich- oder wechselstromgespeist werden. Die jeweilige Dehnung verursacht eine kleine Widerstandsänderung in den Dehnmeßstreifen, die anhand einer Spannungsänderung ermittelt werden kann. Als Grundschaltung wird eine Wheatstone-Brücke angewandt, die in Figur 5 als Vollbrücke dargestellt ist. Diese wird durch vier sogenannte Brückenzweige gebildet, wobei in Fig. 5 jeder Dehnmeßstreifen jeweils einem Widerstand zugeordnet ist ( DMS1=R1 , etc). Einer Brückendiagonalen wird die Brückenspeisespannung P (auch U_E) zugeführt. An den anderen wird die Signalausgangsspannung F (auch U_A) abgegriffen.

Anhand Figur 5 soll das Meßprinzip mittels Schubspannungen erläutert werden. Die Dehnungswerte benachbarter Brückenzweige subtrahieren sich bei gleichsinniger Dehnung und addieren sich bei gegensinniger. Um eine sehr gute Empfindlichkeit zu erhalten, müssen also sämtliche Dehnungsmeßstreifen, die eine positive Widerstandsänderung (Dehnung) ergeben, in den zueinander gegenüberliegenden Brückenzweigen verschaltet werden. Dementsprechend müssen die Dehnmeßstreifen, die eine negative Widerstandsänderung (Stauchung) erfahren, in den benachbarten Brückenzweigen appliziert werden. Folglich addieren sich die Dehnungswerte aller Dehnungsmeßstreifen und der Wert des Signals ist größer, als das bei einem einzelnen Dehnungsmeßstreifen der Fall ist.

Dadurch kompensieren sich Biegedehnungen, Wärmedehnungen, Dehnungen aus Zug- und Druckkräften automatisch.

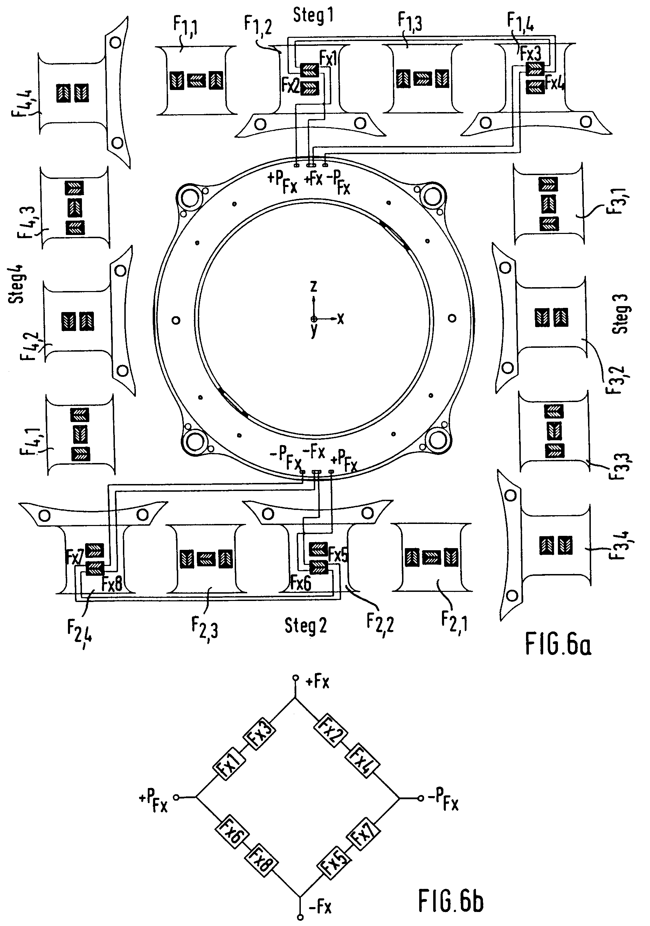

Beim vorliegenden Ausführungsbeispiel sind jeweils zwei Dehnmeßstreifen in geeigneter Ausrichtung auf einer Trägerfolie angeordnet. Wie nachfolgend nochmals näher erläutert wird, werden acht Dehnmeßstreifen zur Aufnahme der Komponente Fx auf der Vorder- und Rückseite von Meßstegen 1 und 2 und acht Dehnmeßstreifen für die Messung der Kraft Fz auf der Vorder- und Rückseite von Meßstegen 3 und 4 appliziert. Zur Messung der Seitenkraft Fy werden insgesamt sechzehn Dehnmeßstreifen mittig auf der linken und rechten Seite aller Meßstege geklebt (Fig. 6a-8b).

Zur Signalaufnahme des Momentes Mx kommen wie bei Fx die Meßstege 1 und 2 zum Einsatz, jedoch werden auf der linken und rechten Seite dieser Meßstege jeweils vier DMS (Dehnmeßstreifen) angebracht und verschaltet. Die gleiche Schaltung wird bei der Messung des Momentes Mz auf den Meßstegen 3 und 4 verwendet.

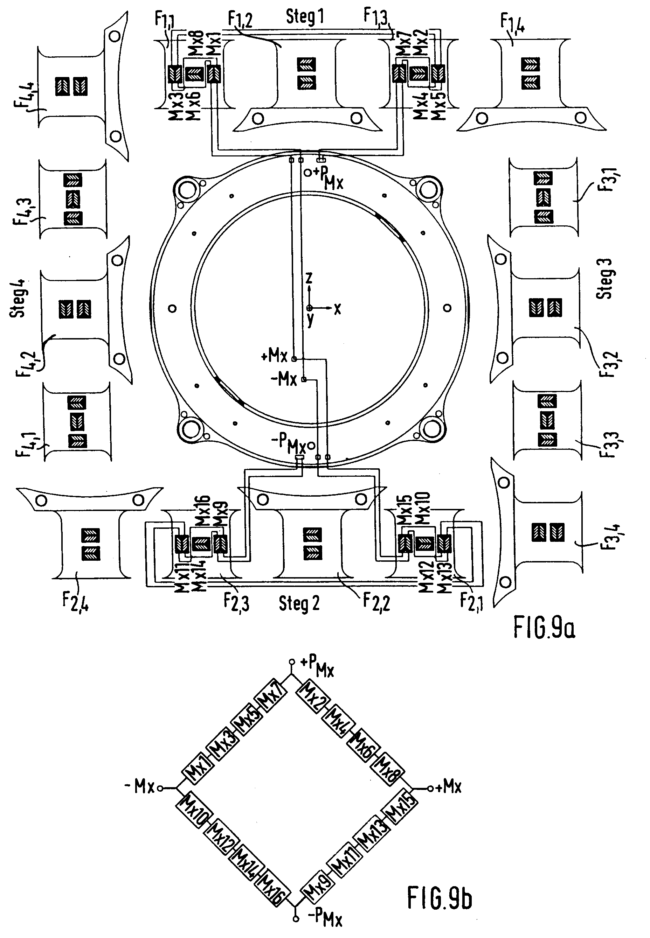

Das Signal des Brems-Antriebsmomentes My wird durch sechzehn auf der Vorder- und Rückseite aller Meßstege geklebten Dehnmeßstreifen aufgenommen (vgl. Fig. 9a-11b).

Die Anordnung der Dehnmeßstreifen erfolgt unter Verwendung eines heißaushärtenden Klebers, und nach dem Aushärten werden die Meßstellen mit einem Polyurethan-Lack überzogen. Dieser Überzug dient als Schutz vor Feuchtigkeit und anderen Umwelteinflüssen.

Die Wheatstone'sche Brückenschaltung kann sowohl mit Gleichspannung als auch mit Wechselspannung gespeist werden.

Nachfolgend soll die genauere Anordnung und Verschaltung der Dehnmeßstreifen zur Erfassung der drei Kräfte und der drei Momente nochmals im einzelnen anhand der Figuren 6-11 erläutert werden. In diesen Figuren ist jeweils ein Verdrahtungsplan der DMS-Brücken der Radmeßnabe schematisch dargestellt, wobei auch die Ausrichtung durch die Angabe des Koordinatensystems (X-Richtung, Z-Richtung und Y-Richtung) klar definiert ist. Bezüglich dieses Koordinatensystems sind in den Figuren 6-11 oben, unten, rechts und links die entsprechenden Meßstege 1 bis 4 durch jeweils eine Abbildung ihrer vier Flächen dargestellt, wobei die Flächen $F_{1,2}$, $F_{1,4}$, $F_{2,2}$, $F_{2,4}$, $F_{3,2}$, $F_{3,4}$, $F_{4,2}$ und $F_{4,4}$ jeweils parallel zur Radialfäche der Radmeßnabe bzw. des Meßwertaufnehmers ausgerichtet sind. Die übrigen Flächen $F_{1,1}$, $F_{1,3}$, $F_{2,1}$, $F_{2,3}$, $F_{3,1}$, $F_{3,3}$, $F_{4,1}$, $F_{4,3}$ sind jeweils senkrecht zu der Radialebene ausgerichtet, jedoch sind sie in den Figuren 6-11 jeweils in einer Bildebene dargestellt, um die Anordnung und die Verschaltung der jeweiligen Dehnmeßstreifen genau darstellen zu können.

Das Signal der Längskraft Fx wird unter Verwendung einer DMS-Vollbrückenschaltung aufgenommen. Diese Vollbrücke besteht - wie aus den Figuren 6a und 6b zu erkennen ist - aus vier Zweigen mit jeweils zwei in Serie geschalteten Dehnmeßstreifen. Die genaue Anordnung und Verschaltung ist der Figur 6a im Detail zu entnehmen. An die mit ±P gekennzeichneten Anschlüssen wird die Versorgungsspannung angelegt und an den mit ±Fx gekennzeichneten Anschlüssen das Meßsignal abgenommen.

In Figur 6b ist ein Schaltbild einer Vollbrückenschaltung dargestellt, wobei die einzelnen Dehnmeßstreifen Fx1 bis Fx8 an den in Figur 6a angegebenen Meßstegen bzw. Meßstegflächen angeordnet sind.

Anhand der Figuren 6a und 6b wird deutlich, daß die Dehnmeßstreifen Fx1, Fx3, Fx5 und Fx7 bei Einwirkung einer Längskraft Fx in positiver Richtung die gleiche Verformung erfahren, nämlich eine positive Widerstandsänderung (Dehnung). Auf diese Weise wird die Lage dieser Dehnmeßstreifen in der Vollbrücke bestimmt, so daß Fx1 und Fx3 im selben Brückenzweig plaziert werden müssen, da sie auf der Vorder- und Rückseite eines Meßsteges appliziert sind.

Die Dehnmeßstreifen Fx2, Fx4, Fx6 und Fx8 erfahren dagegen eine negative Widerstandsänderung. Daher müssen sie in benachbarten Brückenzweigen verschaltet werden. Denn in dieser Form wird eine Addition aller Dehnungswerte bewirkt und so die Empfindlichkeit dieser Vollbrücke erhöht.

Ändern sich die Brückenwiderstände R1 bis R4 ( R1 = Fx1 + Fx3 , R2 = Fx6 + Fx8 , etc.) in ihrem Wert um den Betrag $\Delta R$, dann wird die Brückenschaltung "verstimmt" und zwischen den Punkten +Fx und -Fx steht eine Ausgangsspannung UA an.

Werden die Meßstege 1 und 2 durch Seitenkräfte belastet, entstehen Torsionskräfte. Es befinden sich jedoch auf der Vorder- und Rückseite eines Steges zwei in Serie geschaltete Dehnmeßstreifen. Einer erfährt eine positive und der andere eine negative Widerstandsänderung $\Delta R$. Da beide sich im gleichen Brückenzweig befinden, kompensieren sie sich gegenseitig und es werden dadurch keine Torsionskräfte bzw. Seitenkräfte gemessen, obwohl sich die entsprechenden Stege verwinden. Durch die beschriebene DMS-Anordnung und Verschaltung wird ein Übersprechen der Kraft- und Momentenkomponenten ausgeschlossen.

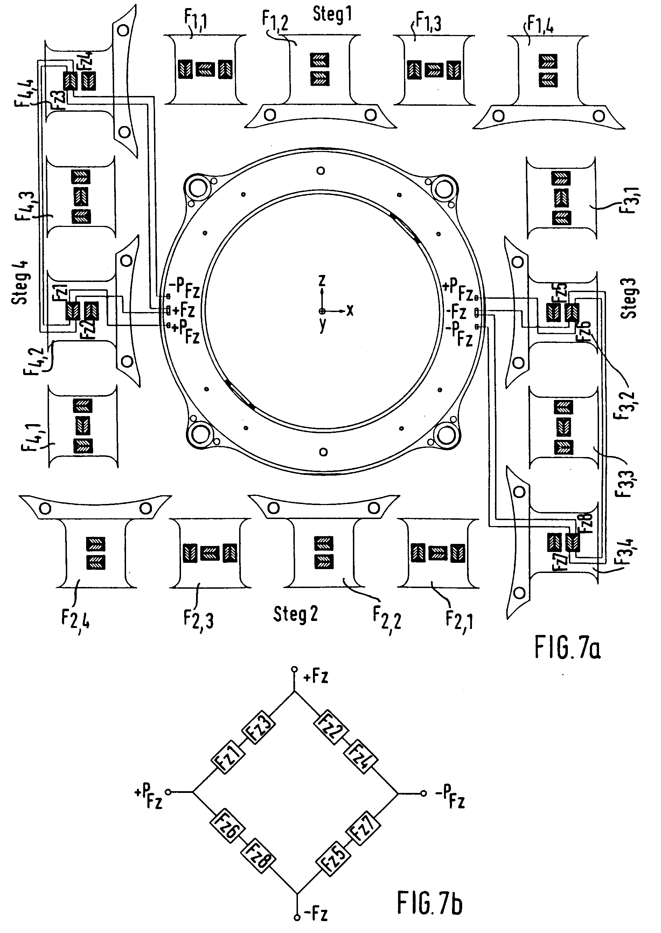

Die Dehnmeßstreifen-Schaltung zur Aufnahme der Radaufstandskraft Fz entspricht in ihrer Wirkungsweise und Auslegung der Vollbrückenschaltung zur Erfassung der Längskraft Fx. Acht Dehnmeßstreifen werden auf den zu den Meßstegen 1 bzw. 2 um 90° versetzten Meßstegen 3 und 4 entsprechend Figur 7a appliziert.

Die Dehnmeßstreifen Fz1 bis Fz8 erfahren bei einer Kraft in Z-Richtung eine analoge Widerstandsänderung wie die Dehnmeßstreifen Fx1 bis Fx8, so daß auf die Arbeitsweise nicht näher eingegangen werden muß.

Insgesamt wird durch die vorgenannte Verschaltung erreicht, daß die Erfassung der Längs- und Radaufstandskräfte beim rotierenden Rad unter Verwendung von zwei identischen, um 90° zueinander versetzten Meßstellen ermöglicht ist. Die Erfassung dieser Kräfte erfolgt im Koordinatensystem des Rades, d. h. bei drehendem Rad ergibt sich ein sinusförmiger Verlauf für Fx und Fz. Mit Hilfe eines zeitsynchron erfaßten Raddrehwinkels ist eine Koordinatentransformation möglich und man erhält die auftretenden Kräfte bezogen auf das Fahrzeugkoordinatensystem.

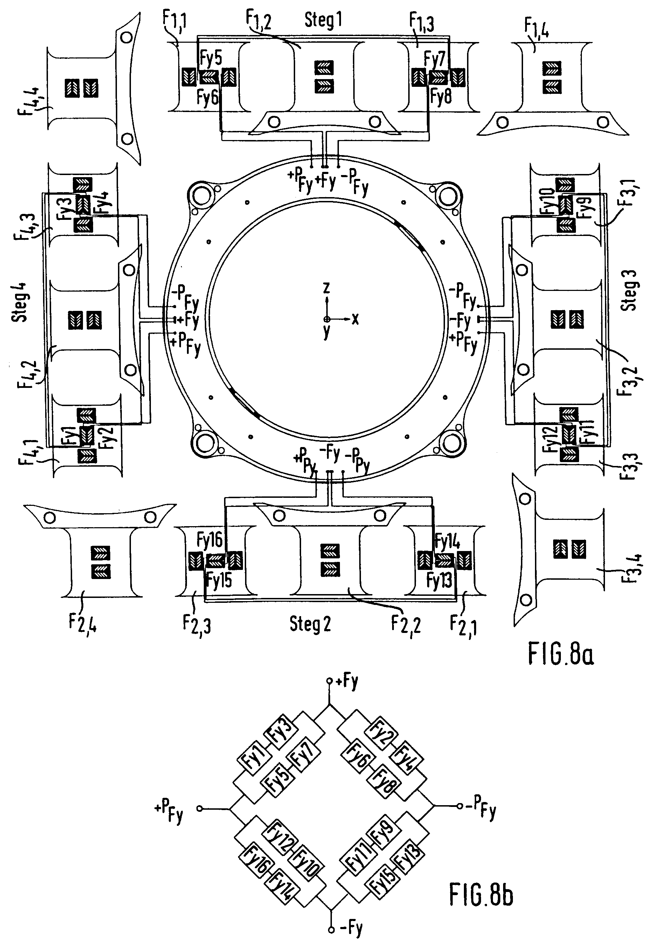

Zur Ermittlung der Seitenkraft Fy wird eine Vollbrücken-Schaltung bestehend aus sechzehn Dehnmeßstreifen an den vier Meßstegen 1-4 appliziert, wobei auf der linken und rechten Seite jedes Steges jeweils zwei DMS angeordnet sind. In jedem Brückenzweig dieser Schaltung befinden sich in Parallelschaltung zwei Paare von in Reihe geschalteten Dehnmeßstreifen, wie dies in den Figuren 8a bzw. 8b dargestellt ist.

Acht der sechzehn applizierten Dehnmeßstreifen, nämlich die mit geraden Indexzahlen Fy2, Fy4 bis Fy16, erfahren bei Einwirkung einer positiven Seitenkraft (nach innen) die gleiche Widerstandsänderung, also eine positive Dehnung. Die am selben Steg befindlichen Dehnungsmeßstreifen werden in Reihe geschaltet. Die Parallelschaltung erfolgt mit den beiden Dehnmeßstreifen gleicher Widerstandsänderung des nächsten um 90° versetzten Meßsteges.

Die restlichen mit ungeraden Indexzahlen vorhandenen Dehnmeßstreifen Fy1, Fy3 bis Fy15 erfahren dagegen eine negative Widerstandsänderung (Stauchung), demzufolge werden diese in den benachbarten Brückenzweigen nach demselben Schema wie die vorigen DMS verschaltet. Durch die beschriebene DMS-Anordnung und -Verschaltung wird ein Übersprechen der Längs- und Radaufstandskräfte ausgeschlossen.

Die in den Figuren 8a und 8b dargestellte Vollbrükken-Schaltung ermöglicht das Erfassen der auf das Rad seitlich wirkenden Belastung unabhängig vom Hebelarm, von Reifenart und Reifengröße.

Das durch die Seiten- und/oder Radaufstandskräfte verursachte Sturzmoment Mx um die Längsachse X wird unter Verwendung einer Schaltung gemessen, wie sie in den Figuren 9a und 9b dargestellt ist. Diese Schaltung besteht aus 16 Dehnmeßstreifen, welche an den Meßstegen 1 und 2 seitlich appliziert werden. In jedem Brückenzweig befinden sich vier in Reihe geschaltete Dehnmeßstreifen. Beim Auftreten eines negativen Sturzmomentes Mx, das Rad bewegt sich dabei vom positiven in den negativen Sturz, werden bei der Nullgrad-Stellung (Meßsteg 1 oben), die Dehnungsmeßstreifen Mx1, Mx3, Mx5 und Mx7 oben Radinnenseite weisend, in positive Richtung gedehnt. Analog dazu müssen die Dehnmeßstreifen des gegenüberliegenden Brückenzweiges, um die gleiche Widerstandsänderung zu erzeugen, so plaziert werden, daß sie bei Bewegung unten Radaußenseite weisend auch eine positive Dehnung erfahren.

Auf diese Weise werden nicht die Seitenkräfte erfaßt, sondern nur das von ihnen verursachte Moment Mx. Betrachtet man die Dehnmeßstreifen zur Ermittlung der Seitenkraft Fy am Meßsteg 1, so liegen sie genau spiegelbildlich zu dem vom Meßsteg 2. Die Dehnmeßstreifen des Momentes Mx dagegen, liegen auf Meßsteg 1 und 2 nicht symmetrisch zueinander. Durch diese ausgewählte Lage der Dehnmeßstreifen wird das Übersprechen der anderen Belastungen auf das Moment Mx vermieden.

Die restlichen Dehnmeßstreifen werden dementsprechend in den benachbarten Brückenzweigen verschaltet. Es ist auch zu erkennen, daß an jeder Meßstegseite zwei der vier in Reihe verschalteten Dehnmeßstreifen zu finden sind. Dies trägt zur besseren Empfindlichkeit der Brückenschaltung und so der Signalgüte bei.

Die Verschaltung zur Ermittlung des Rückstellmoments Mz entspricht in ihrer Auslegung und Wirkungsweise in analoger Weise der Vollbrückenschaltung des Sturzmomentes Mx.

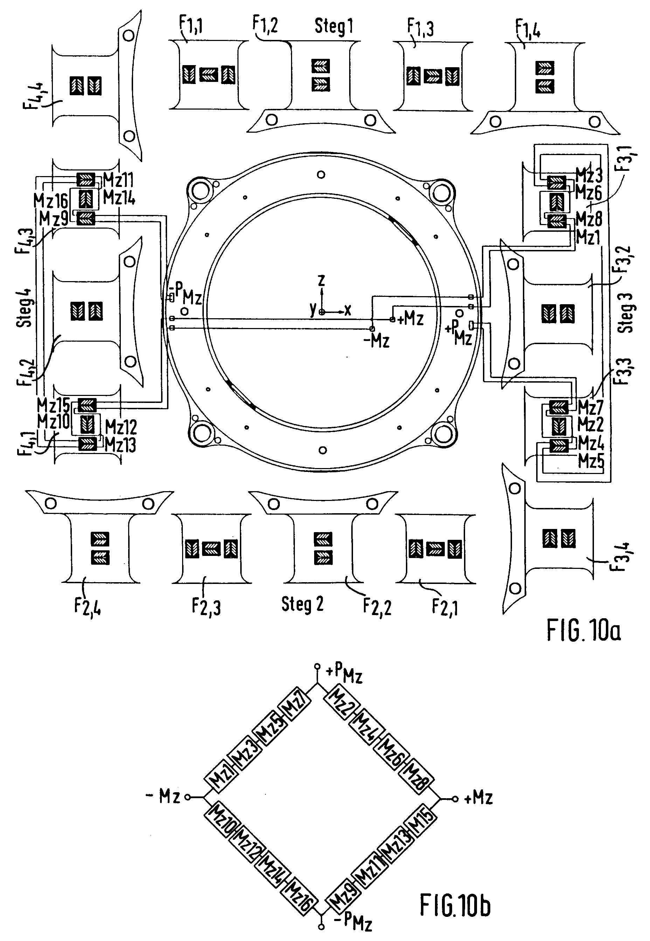

Dies ist in den Figuren 10a und 10b zum Ausdruck gebracht, wobei für die Dehnmeßstreifen Mz1 bis Mz16 die Ausführungen analog zu den Ausführungen bezüglich des Sturzmomentes Mx entsprechend gelten.

Bei Einwirkung eines positiven Rückstellmomentes um die Hochachse Z gegen den Uhrzeigersinn bei der Nullgrad-Stellung betrachtet, erfahren acht der sechzehn Dehnmeßstreifen eine positive Widerstandsänderung (Dehnung), nämlich die Widerstände mit geraden Indexzahlen Mz2 bis Mz16. Die restlichen werden in negativer Richtung gedreht (Stauchung). Es werden die Dehnmeßstreifen mit gleicher Widerstandsänderung, die sich an einem Meßsteg befinden, wie beim Sturzmoment, in Reihe geschaltet.

Da diese Dehnmeßstreifen-Schaltung um 90° zu der vom Sturzmoment versetzt an den Meßstegen 3 und 4 liegt, wird sichergestellt, zwei identische Meßstellen zu schaffen, die während der Umdrehung der Radmeßnabe abwechselnd das Sturz- und das Rückstellmoment ermitteln.

Demzufolge müssen sich bei der Aufzeichnung der Signale während einer Raddrehung unter Belastung für beide Meßstellen zwei um 90° zueinander versetzte Sinuswellen ergeben. Mit geeigneten Rechenverfahren können dann über die Winkelfunktion bezogen auf das Fahrzeugkoordinatensystem das Sturzmoment Mx und das Rückstellmoment Mz ermittelt werden.

Eine sehr wichtige Meßgröße stellt das Brems-Antriebsmoment My dar. Es ist in der Fahrzeugentwicklung für die Dimensionierung und Erprobung verschiedener Antriebs- und Fahrwerksbauteile notwendig.

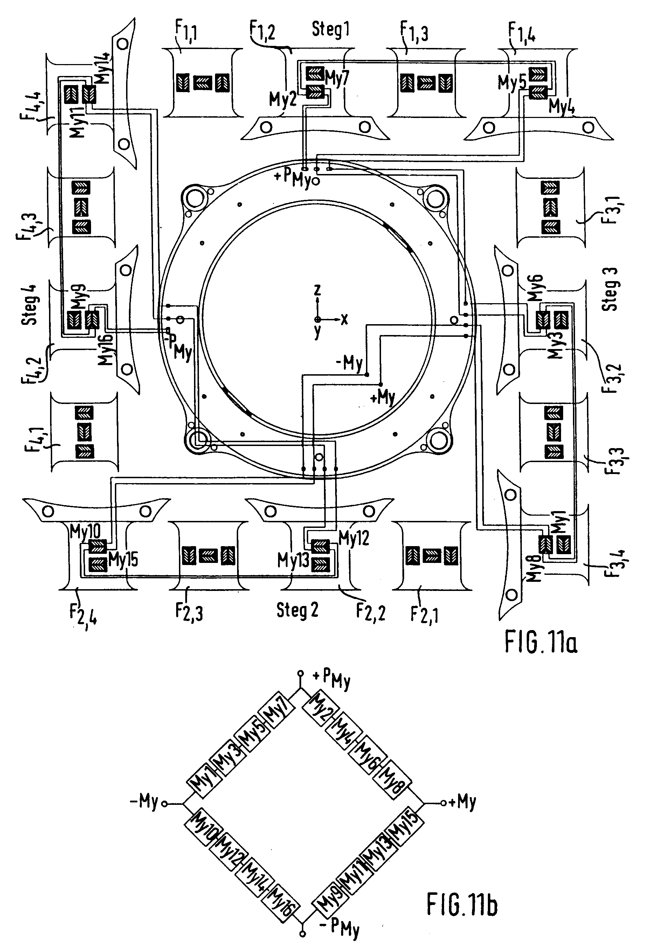

Zur Erfassung des Momentensignals werden gemäß den Figuren 11a und 11b sechzehn Dehnmeßstreifen in einer Vollbrücke verschaltet. Es werden auf der Vorder- und Rückseite aller vier Meßstege 1-4 jeweils vier Dehnmeßstreifen appliziert. In jedem Brükkenzweig befinden sich gemäß Figur 11b vier in Reihe geschaltete Dehnmeßstreifen, zwei davon werden auf denselben Stegen und die anderen zwei auf den nächsten um 90° versetzten Meßstegen angebracht.

Die Längskraft selbst wird von dieser Schaltung nicht gemessen, sondern nur das von ihr verursachte Bremsmoment.

Bei Einwirkung eines positiven Bremsmomentes im Uhrzeigersinnn, beispielsweise an einem rechtsmontierten Vorderrad eines Kraftfahrzeugs, erfahren alle Dehnmeßstreifen der zueinander gegenüberliegenden Brückenzweige die gleiche Widerstandsänderung. In diesem Fall erfahren die Dehnmeßstreifen mit geraden Indexzahlen My2 bis My16 eine positive Dehnung. Die restlichen mit ungeraden Indexzahlen My1 bis My15 erfahren dagegen eine negative Widerstandsänderung.

Es wird dadurch ermöglicht, daß sich die Dehnungswerte aller beteiligten aktiven Dehnmeßstreifen addieren, und so die sehr gute Empfindlichkeit dieser Vollbrücke gewährleistet wird. Wäre der Körper mit Halb- bzw. Viertelbrücken versehen, so würde man bei gleicher Belastung nur das halbe bzw. viertelte Ausgangssignal erzielen. Durch die Verwendung von vier aktiven Brückenzweigen desselben Widerstandswertes besitzt diese Verschaltung, genauso wie die vorigen fünf Vollbrücken mit ebenfalls vier aktiven Zweigen, den Brückenfaktor 4.

Insgesamt wurden auf allen vier Meßstegen 1-4 achtzig Dehungsmeßstreifen angeordnet.

Mit der vorliegenden Radmeßnabe wurde ein System geschaffen, das in der Lage ist, alle sechs Komponenten der auftretenden Radkräfte und Radmomente einwandfrei und zeitsynchron zu erfassen.

Bei Messungen, welche die Betriebslasten ohne Übersprechen hysteresefrei an einem Kraftfahrzeug aufzeigen sollen, werden alle vier Räder des Kraftfahrzeugs mit den vorgenannten Radmeßnaben bestückt. Anschließend werden die im Fahrbetrieb ermittelten Betriebslasten auf servohydraulischen Prüfständen simuliert. Dazu werden mit einem ITFC- bzw. RPC-Prozeß (ITFC = Iterative-Transfer-Function-Compensation, RPC = Remote-Parameter-Control) die Ansteuerdaten so lange neu berechnet und geändert, bis die Soldaten (Fahrbetrieb) mit den Istdaten (Prüfstandssimulation) übereinstimmen. Für diesen Vorgang und der daraus resultierenden Güte eines Betriebslasten-Nachfahrversuches ist es notwendig, Soll- und Istwerte am gleichen Meßort zu erfassen. Dieser Forderung wird durch den Einsatz der Mehrkomponenten-Radmeßnabe genügt.

Die simultane Aufzeichnung von Längs- und Seitenkraft, Radlast, Rückstell-, Sturz- und Antriebs- bzw. Bremsmoment ist möglich. Die eigentlichen Meßgeber des Meßwertaufnehmers sind die vier speichenförmig (jeweils um 90° versetzt) angeordneten und mit Dehnmeßstreifen bestückten Dehnmeßstege, wobei nur Schubspannungen ermittelt werden.

Die Radmeßnabe ist ein komplexes Meßsystem zur Signalerfassung, -aufbereitung und Bereitstellung der Meßwerte in Form bitserieller Daten vor Ort, deren Übertragung zum Fahrzeug beispielsweise mittels IR-Telemetrie erfolgt. Empfängerseitig stehen nach Decodierung, Wandlung und Verrechnung bezogen auf das Fahrzeugkoordinatensystem die Meßdaten sowohl in analoger Form als auch digital, bitseriell zur Verfügung.

Die Spannungsversorgung des rotierenden Teils des Systems ist mittels induktiver Leistungsübertragung gewährleistet.

Für die Winkelerfassung und Drehrichtungserkennung sind ein Impulsring 27 (Fig. 2) und zwei aktive Hall-Sensoren (nicht dargestellt) sowie eine entsprechende Steuerelektronik vorgesehen. Der Impulsring 27 wird an der Innenseite des Rades angeordnet, die Hall-Sensoren werden über einfache Halterungen an Fahrwerkskomponenten befestigt. Bei einigen bisher eingesetzten Radmeßnabensystemen wurde der Sensor zur Bestimmung des Radwinkels über Haltebügel fixiert (z.B. an der Vorderachse am Federbeinstandrohr). Sturzwinkeländerungen, hervorgerufen durch Lenkmanöver, beeinflussen das Radwinkelsignal. Die Verfälschung wird durch den Einsatz des Impulsringes zur Bestimmung der Radposition vermieden.

Das Gesamtgewicht der Radmeßnabe ist gering, damit bei dynamischen Messungen Masseverfälschungen klein bleiben. Dabei ist das Gewicht an dasjenige der Origindlräder angenähert worden, wobei zu beachten ist, daß es sich um ein Sicherheitshauteil handelt, das ausreichend dimensioniert werden muß und eine lange Lebensdauer haben soll. Aus diesen Gründen ist in der Konstruktions- und Optimierungsphase des Meßkörpers eine Finite Elemente Berechnung durchgeführt worden. Während der Inbetriebnahme des Meßsystems wurden umfangreiche Betriebsfestigkeitsuntersuchungen auf Räderprüfständen durchgeführt.

Bei der Wahl der Werkstoffe sind die Anforderungen hinsichtlich Funktion, Beanspruchung und Lebensdauer berücksichtigt worden sowie die Herstellungskosten. Werkstoffe für Meßwertaufnehmer auf Dehnmeßstreifen-Basis müssen gleichzeitig eine hohe Empfindlichkeit sowie eine ausreichende Biegewechselfestigkeit aufweisen. Da diese Eigenschaften entgegengesetzt sind, muß ein Kompromiß gefunden werden. Um dies zu erreichen wird ein Werkstoff gewählt, der einen mittleren E-Modul hat und hohe Festigkeitswerte aufweist. Der Meßkörper muß außerdem so gestaltet werden, daß er an den zu messenden Stellen die höchste Empfindlichkeit besitzt und an den übrigen Stellen steifer dimensioniert ist.

Eine gute Meßsignalauflösung bei geringem Übersprechen der einzelnen Komponenten wird verlangt.

Da die Radkräfte im umlaufenden Koordinatensystem gemessen werden, muß eine Koordinaten-Transformation in das fahrzeugfeste Koordinatensystem erfolgen. Aus diesem Grund muß die absolute Winkelstellung des Rades in bezug auf das Fahrzeug-Koordinatensystem ständig erfaßt werden.

Da es sich bei dem Winkelcodierer um einen Inkrementalgeber handelt, muß die Richtung der Raddrehung erfaßt werden, um zu vermeiden, daß im Vorzeichen unterschiedliche Winkeländerungen des Rades aufaddiert und fälschlicherweise als Drehung interpretiert werden.

Aus der Kombination von Drehrichtung und Impulsen des Inkrementalgebers ergibt sich die absolute Winkelstellung des Rades. Diese ist Grundlage für die obengenannte Transformation.

Die auftretenden thermischen Belastungen, hervorgerufen durch hohe Bremsscheibentemperaturen z.B. durch Folgebremsungen aus hohen Geschwindigkeiten oder danach im Stand dürfen nicht zu einem Ausfall des Meßsystems führen. Der Meßwertaufnehmer mit integrierter Elektronik muß gut von der Luft umströmt werden. Wärmestaus sind zu vermeiden. Außerdem ist darauf zu achten, daß die thermischen Verhältnisse der Bremsanlage (Temperaturniveau, Kühlleistung) dem Serienstand sehr nahe kommen. Nur wenn diese Bedingungen erfüllt sind, sind die gemessenen Bremsmomente und -kräfte repräsentativ.

Aus diesem Grund soll die Radmeßnabe nur im Bereich der vier Meßstege abgedeckt werden, um eine bessere Umströmung zu gewährleisten und einen Ausfall des Meßsystems zu vermeiden.

In einem ringförmigen Gehäuse 24 (Fig. 2) im Meßwertaufnehmer 5 befinden sich auf mehreren übereinanderliegenden Ringplatinen die Verschaltungen der sechs Dehnmeßstreifen-Brücken, die analoge Signalaufbereitung und -wandlung, die Schaltungen zur Spannungstabilisierung und zur Brückenversorgung.

Die Datenübertragung erfolgt mittels IR-Übertragung. Beispielsweise ist im inneren Ringteil 12 des Meßwertaufnehmers 5 ein zylindrisches Gehäuse 23 angeordnet, in dem die optoelektronische Strecke zur Datenübertragung vom Stator zum Rotor und das Spulensystem mit zugehöriger Elektronik zur Leistungsübertragung vom Stator zum Rotor untergebracht ist.

Die Spannungsversorgung des rotierenden Teils des System erfolgt mittels induktiver Übertragung.

Empfängerseitig werden nach Decodierung, Wandlung und Verrechnung die Meßdaten sowohl in analoger Form als auch digital, bitparallel und wortseriell zur Verfügung gestellt.

Die Ausführung der gesamten Elektronik erfolgt in stromsparender SMD-Technik und sorgt für eine Reduzierung des Gesamtvolumens und Gewichts.

Durch die Zusammenschaltung der Dehnmeßstreifen zu Vollbrücken gelingt eine einwandfreie Trennung der Komponenten. Die Anzahl der Stege ist mit Einschränkung frei wählbar, jedoch ist vorliegend infolge einer Optimierung auf einen entsprechenden Anwendungsfall hin eine Meßsteganzahl von vier gewählt worden. Die Verwendung der modernen PCM-Telemetrie mit Infrarot-Übertragungsstrecke garantiert höchste Störsicherheit und Genauigkeit. Der Vorteil berührungsloser Übertragungsstrecken gegenüber Schleifring-Drehübertragern ist der geringe Platzbedarf, niedriges Gewicht und verschleißfreie Arbeitsweise.

In Figur 3 ist ein Blockschaltbild für die Signalaufbereitung und -verarbeitung dargestellt, wobei ein Teil am rotierenden Teil der Radmeßnabe angeordnet ist und ein anderes Teil feststeht.

Die Signale werden übertragen, decodiert und die Meßwerte werden on-line vom rotierenden Koordinatensystem des Rades auf das Koordinatensystem des Fahrzeugs umgerechnet. Dazu wird die Winkelstellung des Rades zeitsynchron zur Aufnahme der Meßsignale erfaßt.

In einer beispielsweise im Fahrzeug vorhandenen Verrechnungseinheit werden die Meßwerte mit einem Microprozessor verrechnet. Nach der Synchronisierung ergibt sich eine zeitliche Zuordnung der Meßwerte zum Raddrehwinkel. Auf diese Art und Weise erhält man die von der Radstellung unabhängigen Absolutkräfte im Fahrzeugkoordinatensystem.

Prinzipiell werden neben dem Meßwertaufnehmer eine modifizierte Felge, ein Radflansch und eine PCM-Telemetrieübertragungseinrichtung sowie ein Impulsring und zwei Hall-Sensoren zur Bestimmung der Winkelstellung des Rades gemäß der vorgenannten Ausführungsform benötigt.

Der vom Rad aufgenommene Kraftfluß verläuft über die Felge auf das äußere Ringteil 10 des Meßkörpers, weiter über die vier Meßstege auf das innere Ringteil 12 der Radmeßnabe, dann auf den Radflansch.

Der Querschnitt der Stege muß ausreichend dimensioniert sein, damit die resultierenden Spannungen bei maximal auftretenden Belastungen oder Belastungskombinationen unter der Fließgrenze bzw. Elastizitätsgrenze des Werkstoffs liegen. Plastische Verformungsanteile würden den Aufnehmer für die geplante Anwendung unbrauchbar machen.

**Patentansprüche**

1. Radmeßnabe mit
   einem Meßwertaufnehmer (5), der ein äußeres (10) und ein inneres Ringteil (12) umfaßt,

   - wobei an dessen äußerem Ringteil (10) eine Felge anordenbar ist,
   - an dessen innerem Ringteil (12) ein Radflansch anordenbar ist und
   - beide Ringteile über radial verlaufende Meßstege (14) miteinander verbunden sind,
   - an denen Dehnmeßstreifen (16) zur Bestimmung von zu messenden Kräften und Momenten angeordnet sind,

   dadurch gekennzeichnet,
   daß die Dehnmeßstreifen derart angeordnet, ausgerichtet und miteinander verschalten sind, daß alle Kräfte und Momente über die bei Belastung auftretenden Schubspannungen zu ermitteln sind.

2. Radmeßnabe nach Anspruch 1,
   dadurch gekennzeichnet,
   daß im Bereich des Übergangs zwischen den Meßstegen und dem äußeren Ringteil Durchbrüche oder Langlöcher (32) angeordnet sind.

3. Radmeßnabe nach Anspruch 2,
   dadurch gekennzeichnet,
   daß die Länge und Dimensionierung der Durchbrüche oder Langlöcher (32) so abgestimmt ist, daß eine Kräfte- und Momententrennung sowie eine hohe Meßempfindlichkeit erreicht wird.

4. Radmeßnabe nach einem der vorhergehenden Ansprüche,
   dadurch gekennzeichnet,

daß eine Übertragungseinrichtung vorgesehen ist, welche durch die Dehnmeßstreifen gewonnene Daten von der rotierenden Radmeßnabe auf ein fahrzeugfestes Teil überträgt.

5. Radmeßnabe nach Anspruch 4,
dadurch gekennzeichnet,
daß die Übertragungseinrichtung eine Infrarot-Telemetrie-Übertragungseinrichtung ist.

6. Radmeßnabe nach einem der vorhergehenden Ansprüche,
dadurch gekennzeichnet,
daß die Stromversorgung über Induktionsschleifen vorgesehen ist.

7. Radmeßnabe nach einem der vorhergehenden Ansprüche,
dadurch gekennzeichnet,
daß zur Ermittlung der Winkelstellung und/oder Drehrichtung des Meßwertgebers zumindest ein Hallsensor vorgesehen ist, der mit einem mit dem Meßwertaufnehmer (5) verbundenen Impulsring (27) zusammenwirkt.

8. Radmeßnabe nach Anspruch 7,
dadurch gekennzeichnet,
daß der Impulsring (27) ferromagnetisch ist,

9. Radmeßnabe nach Anspruch 7 oder 8,
dadurch gekennzeichnet,
daß der Impulsring (27) eine Codierung zur Bestimmung des 0° Winkels des Meßsystems aufweist.

10. Radmeßnabe nach einem der Ansprüche 7 bis 9,
dadurch gekennzeichnet,
daß der Impulsring am äußeren Ringteil (10) des Meßwertaufnehmers befestigt ist.

11. Radmeßnabe nach einem der Ansprüche 7 bis 10,
dadurch gekennzeichnet,
daß zwei Hallsensoren vorgesehen sind, die derart zueinander winkelversetzt sind, um eine Drehrichtungserfassung zu ermöglichen.

12. Radmeßnabe nach einem der vorhergehenden Ansprüche,
dadurch gekennzeichnet,
daß der im inneren Ringteil (12) vorhandene Einhauraum zur Aufnahme der Steuerungs- und Auswertelektronik hermetisch dicht ist.

13. Radmeßnabe nach einem der vorhergehenden Ansprüche,
dadurch gekennzeichnet,
daß die Steuerungs- und Auswertelektronik die Kräfte und Momente in Echtzeit (on-line) vom rotierenden Koordinatensystem des Rades auf das Fahrzeugkoordinatensystem umrechnet.

14. Radmeßnabe nach einem der vorhergehenden Ansprüche,
dadurch gekennzeichnet,
daß eine im inneren Ringteil (12) aufgenommene Steuerungs- und Auswertevorrichtung vorgesehen ist.

15. Radmeßnabe nach einem der vorhergehenden Ansprüche
dadurch gekennzeichnet,
daß die Längskraft Fx mittels Dehnmeßstreifen (16) bestimmt wird, welche an zur Fahrtrichtung senkrecht stehenden Meßstegen (14) und dort an Meßstegflächen angeordnet sind, die parallel zu einer Radialebene des Meßwertaufnehmers ausgerichtet sind.

16. Radmeßnabe nach Anspruch 15,
dadurch gekennzeichnet,
daß bei der Verwendung von vier Meßstegen (14) die Dehnmeßstreifen (16) in einer Vollbrückenschaltung verschaltet sind und in den vier Zweigen der Vollbrückenschaltung jeweils zwei in Serie geschaltete Dehnmeßstreifen vorgesehen sind, wobei die zwei Dehnmeßstreifen eines Zweiges an den einander gegenüberliegenden Flächen eines Meßsteges (14) angeordnet sind.

17. Radmeßnabe nach einem der vorhergehenden Ansprüche,
dadurch gekennzeichnet,
daß die Radaufstandskraft Fz mittels Dehnmeßstreifen (16) bestimmt wird, welche an in Fahrtrichtung ausgerichteten Meßstegen (14) und dort an Meßstegflächen angeordnet sind, die parallel zur Radialebene des Meßwertaufnehmers ausgerichtet sind.

18. Radmeßnabe nach Anspruch 17,
dadurch gekennzeichnet,
daß bei der Verwendung von vier Meßstegen (14) die Dehnmeßstreifen (16) in einer Vollbrückenschaltung verschaltet sind und in den vier Zweigen jeweils zwei in Serie geschaltete Dehnmeßstreifen (16) angeordnet sind, wobei die zwei Dehnmeßstreifen eines Zweiges an den einander gegenüberliegenden Flächen eines Meßsteges vorgesehen sind.

19. Radmeßnabe nach einem der vorhergehenden Ansprüche
dadurch gekennzeichnet,
daß die Radseitenkraft Fy mittels Dehnmeßstreifen (16) bestimmt wird, welche an allen Meßstegen und dort an jeweils zur Radialrichtung des Meßwertgebers senkrechten Flächen angeordnet sind.

**20.** Radmeßnabe nach Anspruch 19,
dadurch gekennzeichnet,
daß bei der Verwendung von vier Meßstegen (14) die Dehnmeßstreifen (16) in einer Vollbrückenschaltung verschaltet sind und jeweils zwei in Reihe geschaltete Dehnmeßstreifen (16) in einem Zweig der Vollbrückenschaltung parallel geschaltet sind, wobei die beiden Dehnmeßstreifen (16) in einer jeweiligen Reihenschaltung an den gegenüberliegenden Flächen jeweils eines Meßsteges angeordnet sind und die beiden einer Parallelschaltung der jeweiligen Reihenschaltungen in einem Zweig der Vollbrücke zugeordneten Meßstege aufeinander senkrecht stehen.

**21.** Radmeßnabe nach einem der vorhergehenden Ansprüche,
dadurch gekennzeichnet,
daß das Sturzmoment Mx mittels Dehnmeßstreifen (16) bestimmt wird, welche an den senkrecht zur Fahrtrichtung ausgerichteten Meßstegen (14) und dort an jeweils zur Radialachse des Meßwertgebers senkrechten Flächen angeordnet sind.

**22.** Radmeßnabe nach Anspruch 21,
dadurch gekennzeichnet,
daß bei der Verwendung von vier Meßstegen (14) die Dehnmeßstreifen (16) in einer Vollbrückenschaltung verschaltet sind und in jedem Zweig der Vollbrückenschaltung vier Dehnmeßstreifen (16) in Reihe geschaltet sind, von denen jeweils zwei auf gegenüberliegenden Seiten eines Meßsteges (14) angeordnet sind.

**23.** Radmeßnabe nach einem der vorhergehenden Ansprüche,
dadurch gekennzeichnet,
daß das Rückstellmoment Mz mittels Dehnmeßstreifen (16) bestimmt wird, welche an in Fahrtrichtung ausgerichteten und dort an jeweils zur Radialrichtung des Meßwertgebers senkrechten Meßstegflächen angeordnet sind.

**24.** Radmeßnabe nach Anspruch 23,
dadurch gekennzeichnet,
daß bei der Verwendung von vier Meßstegen (14) die Dehnmeßstreifen (16) in einer Vollbrückenschaltung verschaltet sind und in jedem Zweig der Vollbrückenschaltung vier Dehnmeßstreifen (16) in Reihe geschaltet sind, von denen jeweils zwei auf gegenüberliegenden Seiten eines Meßsteges angeordnet sind.

**25.** Radmeßnabe nach einem der vorhergehenden Ansprüche,
dadurch gekennzeichnet,
daß das Bremsmoment My mittels Dehnmeßstreifen (16) bestimmt wird, welche an allen Meßstegen (14) und dort an jeweils zur Radialebene des Meßwertaufnehmers parallelen Meßstegflächen angeordnet sind.

**26.** Radmeßnabe nach Anspruch 25,
dadurch gekennzeichnet,
daß bei der Verwendung von vier Meßstegen (14) die Dehnmeßstreifen (16) in einer Vollbrückenschaltung verschaltet sind und in jedem Zweig der Vollbrückenschaltung vier Dehnmeßstreifen (16) in Reihe geschaltet sind, von denen zwei Dehnmeßstreifen auf einander gegenüberliegenden Seiten eines Meßsteges und die anderen zwei auf den einander gegenüberliegenden Seiten eines um 90° winkelversetzten Meßsteges angeordnet sind.

**27.** Radmeßnabe nach einem der vorhergehenden Ansprüche,
dadurch gekennzeichnet,
daß die auf den Meßstegen angeordneten Dehnmeßstreifen abgedeckt sind.

**28.** Radmeßnabe nach einem der vorhergehenden Ansprüche,
dadurch gekennzeichnet,
daß die Verschaltung der einzelnen Dehnmeßstreifen zu den Brückenschaltungen auf einer ringförmigen Platine ausgeführt ist.

**29.** Radmeßnabe nach einem der vorhergehenden Ansprüche,
dadurch gekennzeichnet,
daß vier Meßstege (14) vorgesehen sind, die jeweils um 90° winkelversetzt sind.

Fig. 1

Fig. 2

**Schaltschema**
**Motorsport - Mehrkomponenten - Radmeßnabe**

rotierend ———————————— feststehend

Fx, Fy, Fz, Mx, My, Mz, Pt100, NN → Signalaufbereitung → A/D → PCM - Encoder → IR Sender → IR Empf. → PCM - Decoder → Verrechnungseinheit - DSP → Datenspeicher

SV sekundär, SV primär

Impulsring 360 Imp/U, Hall - Sensoren → Steuerungs - Elektronik → Verrechnungseinheit - DSP

Fig. 3

Mz, Mx, z-Achse, x-Achse, y-Achse, My, Fx, Fz, Fy

50

Fig. 4

FIG.5

FIG.6a

FIG.6b

FIG.7a

FIG.7b

FIG.8a

FIG.8b

FIG.9a

FIG.9b

FIG. 10a

FIG.10b

FIG. 11a

FIG. 11b